# FASCICULE DE BREVET EUROPEEN

(11) **EP 0 895 627 B1**
(45) Date de publication et mention de la délivrance du brevet: **26.01.2000**
(21) Numéro de dépôt: 97916299.7
(22) Date de dépôt: 21.04.1997
(51) Int. Cl.: G06K 19/077

(54) **ENSEMBLE ELECTRONIQUE COMPRENANT UNE UNITE ELECTRONIQUE RELIEE A UNE BOBINE**
ELEKTRONISCHE BAUGRUPPE MIT EINER AN EINER SPULE VERBUNDENEN ELEKTRONISCHEN EINHEIT
ELECTRONIC ASSEMBLY COMPRISING AN ELECTRONIC UNIT CONNECTED TO A COIL

(30) Priorité: 22.04.1996 FR 9605017
(43) Date de publication de la demande: 10.02.1999
(73) Titulaire: EM Microelectronic-Marin SA, 2074 Marin (CH)
(72) Inventeur: JUAN, Alain, CH-2054 Chézard (CH)
(74) Mandataire: Balsters, Robert
(86) Numéro de dépôt international: CH9700160
(87) Numéro de publication internationale: WO9740469

(56) Documents cités:
- EP-A- 0 376 062
- EP-A- 0 708 414
- DE-A- 4 431 604

## Description

La présente invention concerne un ensemble électronique formé par une unité électronique comprenant deux plages de contact électrique et par une bobine dont les deux extrémités sont reliées électriquement aux deux plages de contact électrique.

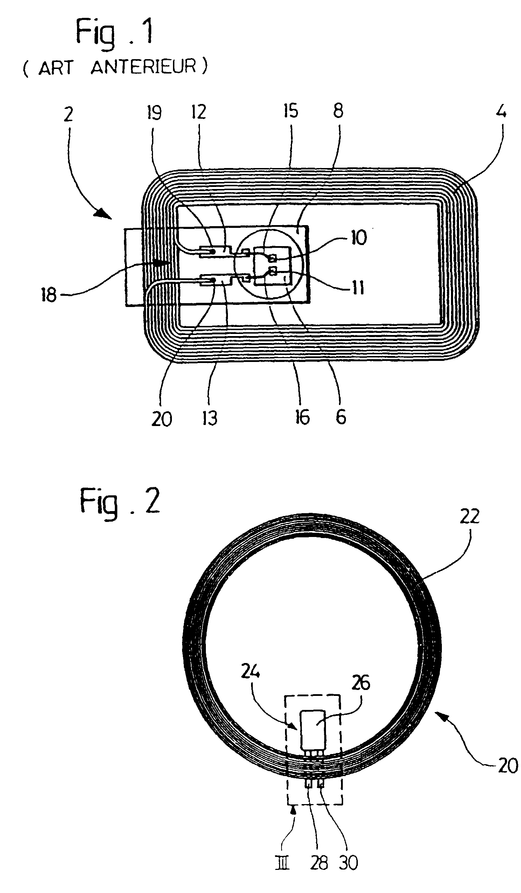

Un tel ensemble connu de l'homme du métier est représenté à la figure 1. Sur cette figure 1, l'ensemble électronique 2 comprend une bobine 4 et un module électronique 6 agencé sur un substrat 8. Le module 6 présente deux plages de contact électrique 10 et 11, lesquelles sont respectivement reliées électriquement à deux plages de contact électrique 12 et 13, disposées sur le substrat 8, au moyen de deux fils 15 et 16 de liaison électrique. La liaison électrique entre le module électronique 6 et la bobine 4 est donc réalisé au moyen de premières plages de contact électrique prévues sur le module 6 et reliées par deux fils métalliques conducteurs à des plages de contact électrique déposées sur le substrat 8. Les deux fils 15 et 16 sont généralement protégés par de la colle déposée après le soudage de ces fils de liaison électrique.

Afin d'assurer la cohésion de l'ensemble électronique 2, la bobine 4, plus particulièrement le corps 18 de cette bobine superposé au substrat 8, est collé sur ce substrat 8. Ainsi, le module électronique 6 est solidaire de la bobine 4 et maintenu fixement à celle-ci par l'intermédiaire du substrat 8.

Il est nécessaire pour un tel ensemble électronique que le module électronique soit correctement fixé à la bobine de telle manière que cet ensemble électronique ne soit pas endommagé lors de la préhension ou de la manipulation de cet ensemble électronique.

L'ensemble électronique 2 décrit ci-avant à l'aide de la figure 1 permet d'obtenir une cohésion relativement satisfaisante de l'ensemble électronique 2. Toutefois, cet ensemble électronique nécessite plusieurs étapes dans son procédé de fabrication, notamment pour disposer le module 6 sur le substrat 8 et pour établir les liaisons électriques entre les plages 10 et 11 de ce module et les plages 12 et 13 prévues sur le substrat 8 sur lesquelles sont respectivement soudées les deux extrémités 19 et 20 de la bobine 4.

Un tel ensemble électronique est décrit dans le document DE-A-4 431 604 sur lequel est basée la réduction du préambule de la revendication 1.

Un but de la présente invention est de fournir un dispositif électronique, comprenant un module électronique et une bobine reliée électriquement à ce module, qui soit de conception simple et peu onéreuse, tout en assurant de manière fiable la cohésion du module électronique et de la bobine.

A cet effet, la présente invention concerne un ensemble électronique tel que défini dans la revendication 1.

On notera que les deux languettes sont agencées de manière à ce que le corps de la bobine puisse être relié solidement à ces deux languettes et que, conjointement, les deux extrémités de cette bobine puissent être convenablement soudées respectivement sur les deux plages de contact électrique.

Grâce aux caractéristiques susmentionnées, l'ensemble électronique selon l'invention ne comporte aucun substrat distinct et ne nécessite aucune liaison électrique particulière entre les extrémités de la bobine et les plages de contact associées au module électronique. De plus, l'ensemble électronique selon l'invention présente une excellente cohésion entre le module électronique et la bobine, ce qui permet une préhension ou manipulation aisée sans risque d'endommager cet ensemble électronique, en particulier la liaison électrique entre les extrémités de la bobine et les deux plages de contact électrique associées au module électronique.

La présente invention sera décrite ci-après en détail à l'aide des figures suivantes, donner à titre d'exemples nullement limitatifs, dans lesquelles :
- la figure 1, déjà décrite, représente schématiquement une vue de dessus d'un ensemble électronique de l'art antérieur;
- la figure 2 est une vue schématique de dessus d'un ensemble électronique selon un premier mode de réalisation de l'invention;
- la figure 3 est une vue partielle agrandie de la figure 2;
- la figure 4 est une vue de côté selon le plan de coupe IV-IV de la figure 3;
- la figure 5 est une vue de dessus, similaire à la figure 3, d'une variante du premier mode de réalisation;
- la figure 6 est une vue de côté selon le plan de coupe VI-VI de la figure 5;
- la figure 7 est une vue schématique partielle en coupe d'une première carte comprenant un ensemble électronique selon la présente invention, et
- la figure 8 est une vue schématique partielle en coupe d'une deuxième carte comprenant un ensemble électronique selon l'invention.

A l'aide des figures 2 à 4, on décrira ci-après un premier mode de réalisation d'un ensemble électronique 20 selon l'invention. Cet ensemble électronique 20 comprend une bobine 22 et une unité électronique 24. Cette unité électronique 24 est formée par un module électronique 26 et deux languettes électriquement conductrices 28 et 30 qui sortent hors du module 26. Les languettes conductrices 28 et 30 sont constituées par un métal ou formées respectivement par deux films présentant une métallisation en surface. Ces languettes 28 et 30 définissent deux plages de contact électrique du module 26.

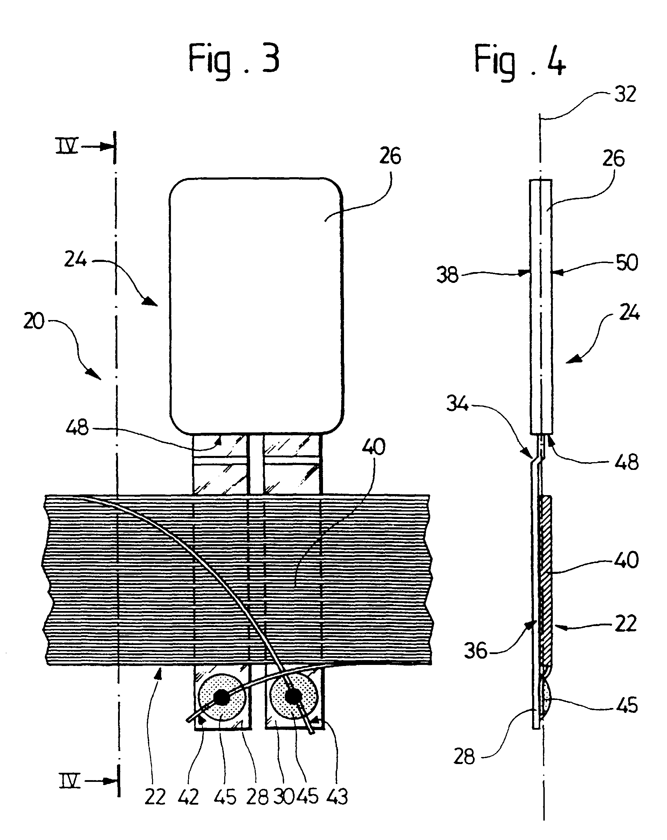

Le module 26 est formé, par exemple, d'un circuit intégré placé dans un boîtier ou surmoulé. Les deux languettes conductrices 28 et 30 sortent du module 26 au niveau de son plan médian 32. Dans la variante représentée à la figure 4, les languettes 28 et 30 présentent un pliage définissant un coude 34. Ce pliage des languettes 28 et 30 permet de disposer la partie d'extrémité 36 de chacune d'elles sensiblement au niveau du plan inférieur du module 26 défini par sa surface inférieure 38.

Les languettes 28 et 30 présentent une longueur suffisante pour permettre de disposer le corps 40 de la bobine 22 sur ces languettes 28 et 30, plus particulièrement sur leur partie d'extrémité 36 décrite précédemment. Le corps 40 de la bobine 22 est fixé solidement aux languettes 28 et 30 au moyen d'un liant solidifié (non représenté), en particulier au moyen d'une colle. Ce liant peut être prévu entre les languettes et le corps de la bobine ou/et sur le corps en débordant sur les languettes. Etant donné que le corps de la bobine est fixé à chacune des deux languettes, le module est fixé rigidement à la bobine de manière sûre, ce qui permet diverses manipulations de l'ensemble sans risque pour les connections électriques.

On notera que la bobine 22 est isolée électriquement des plages de contact électrique définies par les languettes conductrices 28 et 30 étant donné que le fil formant la bobine est lui-même isolé par un recouvrement isolant prévu à cet effet. Ainsi, le corps 40 de la bobine 22 superposé aux languettes 28 et 30 est isolé électriquement de ces languettes.

Les deux extrémités 42 et 43 de la bobine 22 sont soudées respectivement sur les languettes 28 et 30 de manière à établir la liaison électrique entre la bobine 22 et le module électronique 26. On notera que dans la variante proposée ici, les deux extrémités 42 et 43 de la bobine 22 sont soudées respectivement sur les deux parties d'extrémité des languettes 28 et 30.

Le procédé de fabrication de l'ensemble électronique 20 décrit ci-avant est le suivant :

Premièrement, l'unité électronique 24 est apportée sur un dispositif d'assemblage. Ensuite, la bobine est apportée sur le dispositif d'assemblage et cette bobine est fixée solidement aux languettes 28 et 30 au moyen d'un liant prévu à cet effet. Les deux extrémités 42 et 43 de la bobine sont ensuite apportées aux extrémités des languettes 28 et 30 et soudées sur celles-ci par des moyens conventionnels. Finalement, afin de protéger correctement la liaison électrique entre la bobine et les languettes conductrices, une goutte de colle 45 est apportée sur chaque soudure effectuée pour établir la liaison électrique susmentionnée. Il est possible de prévoir également une étape dans laquelle les deux extrémités 42 et 43 de la bobine 22 sont coupées au-delà de la soudure.

On notera, que dans une variante du mode de réalisation décrit ici, les languettes 28 et 30 ne présentent pas de coude 34 et s'étendent intégralement dans le plan médian 32 du module électronique 26.

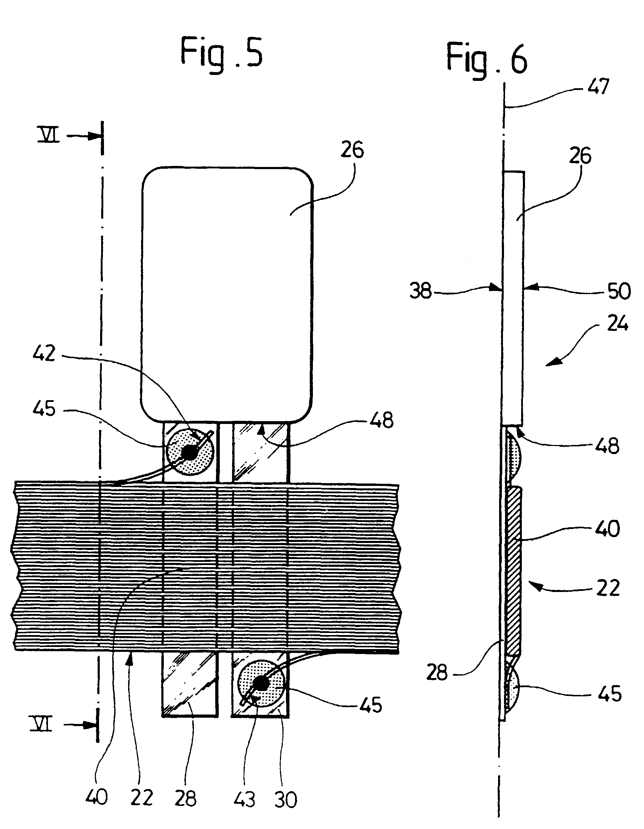

A l'aide des figures 5 et 6, on décrira ci-après une variante particulière du mode de réalisation décrit ci-avant.

Les références déjà décrites ci-avant ne seront pas à nouveau décrites ici en détail.

La présente variante se distingue essentiellement du mode de réalisation décrit ci-avant premièrement en ce que les languettes conductrices 28 et 30 s'étendent dans un plan inférieur 47 du module électronique 26, et deuxièmement en ce que les deux extrémités 42 et 43 de la bobine 22 sont soudées respectivement sur les deux languettes conductrices 28 et 30 d'un côté et de l'autre de la partie du corps 40 de cette bobine 22 disposée sur ces deux languettes conductrices 28 et 30. Cette variante est avantageuse pour permettre un assemblage efficace de l'ensemble électronique, à savoir de former la bobine après avoir soudé l'extrémité 42 sur la languette 28, puis ensuite de souder l'extrémité 43 sur la languette 30 une fois la bobine formée.

On remarquera que, autant dans la variante décrite aux figures 3 et 4 que dans la variante décrite aux figures 5 et 6, la partie du corps 40 qui est superposée aux deux languettes conductrices 28 et 30, sur lesquelles ce corps 40 est fixé au moyen d'un liant (non représenté), est située en regard de la surface latérale 48 du module 26. Ainsi, l'unité électronique 24, la partie du corps 40 de la bobine 22 située dans la région des languettes 28 et 30 et les gouttes de colle solidifiées présentent globalement une hauteur minimale et occupent relativement uniformément la région entre le plan défini par la face inférieure 38 du module 26 et le plan défini par la face supérieure 50 de ce module 26. Cet agencement est particulièrement avantageux pour l'introduction d'une telle unité électronique au sein d'une carte électronique ou de manière générale d'un émetteur-récepteur électromagnétique ayant une faible épaisseur.

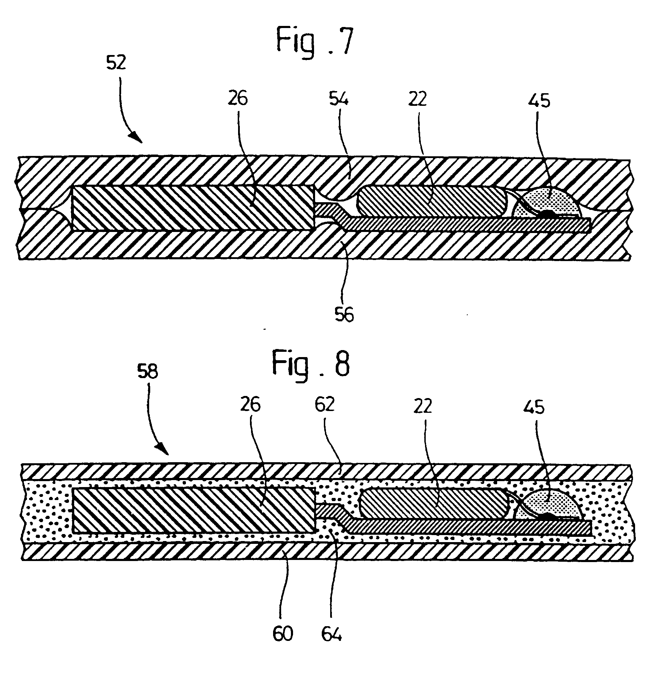

Sur la figure 7 est représentée schématiquement une première carte 52 incorporant un ensemble électronique 24 tel que décrit précédemment. L'ensemble électronique 24 est agencé entre deux couches 54 et 56 soudées l'une à l'autre par des moyens conventionnels connus de l'homme du métier. L'agencement de l'ensemble électronique 24 décrit ci-avant permet d'obtenir des cartes d'excellente qualité, notamment en ce qui concerne l'état des surfaces inférieure et supérieure de ces cartes, pour un coût de fabrication relativement peu élevé.

Sur la figure 8 est représentée une deuxième carte 58 d'un type différent de la carte 52 précédemment décrite. Cette carte 58 comprend deux couches extérieures 60 et 62 et une couche intermédiaire 64 formée par un liant dans lequel est noyé l'ensemble électronique 24 selon l'invention. Les cartes de ce type peuvent avantageusement être obtenues à l'aide d'une technique d'assemblage à froid.

## Revendications

1. Ensemble électronique formé par une unité électronique (24) comprenant un module électronique (26) et deux plages de contact électrique (28, 30) et par une bobine (22) dont les deux extrémités (42, 43) sont reliées électriquement aux deux plages de contact électrique respectives, caractérisé en ce que lesdites deux plages de contact électrique sont définies par deux languettes électriquement conductrices (28, 30), sortant du module électronique 26, ledit corps (40) de ladite bobine étant superposé partiellement à chacune de ces deux languettes, ladite bobine et ladite unité électronique étant fixées l'une à l'autre par un liant solidifié prévu sur les deux languettes et agencé de manière que ledit corps de ladite bobine adhère solidement aux deux plages.

2. Ensemble électronique selon la revendication 1, caractérisé en ce que lesdites deux languettes (28, 30) sortent dudit module électronique (26) au niveau du plan médian (32) de ce module électronique.

3. Ensemble électronique selon la revendication 1 ou 2, caractérisé en ce que la partie desdites deux plages de contact électrique (28, 30) superposée audit corps (40) de la bobine (22) s'étend dans un plan inférieur (47) dudit module électronique (26), la partie dudit corps de la bobine superposée aux deux plages de contact électrique étant située en regard de la surface latérale (48) dudit module électronique (46).

4. Ensemble électronique selon l'une des revendications 1 à 3, caractérisé en ce que les deux extrémités (42, 43) de ladite bobine (22) sont soudées respectivement d'un côté et de l'autre dudit corps (40) de cette bobine.

## Patentansprüche

1. Elektronische Baugruppe, die aus einer elektronischen Einheit (24), die ein elektronisches Modul (26) und zwei elektrische Kontaktflächen (28, 30) aufweist, und aus einer Spule (22), wovon beide Enden (42, 43) mit den beiden entsprechenden elektrischen Kontaktflächen elektrisch verbunden sind, gebildet ist, dadurch gekennzeichnet, daß die beiden elektrischen Kontaktflächen definiert sind durch zwei elektrisch leitende Laschen (28, 30), die aus dem elektronischen Modul (26) vorstehen, wobei der Spulenkörper (40) jeder dieser beiden Laschen teilweise überlagert ist, wobei die Spule und die elektronische Einheit durch ein verfestigtes Bindemittel, das an den beiden Laschen vorgesehen und so beschaffen ist, daß der Körper der Spule fest an den beiden Bereichen haftet, aneinander befestigt sind.

2. Elektronische Baugruppe nach Anspruch 1, dadurch gekennzeichnet, daß die beiden Laschen (28, 30) vom elektronischen Modul (26) auf Höhe der Mittelebene (32) dieses elektronischen Moduls vorstehen.

3. Elektronische Baugruppe nach Anspruch 1 oder 2, dadurch gekennzeichnet, daß sich der Teil der beiden elektrischen Kontaktflächen (28, 30), der dem Körper (40) der Spule (22) überlagert ist, in einer Ebene (47) unterhalb des elektronischen Moduls (26) erstreckt, wobei sich der Teil des Spulenkörpers, der den beiden elektrischen Kontaktflächen überlagert ist, gegenüber der seitlichen Oberfläche (48) des elektronischen Moduls (46) befindet.

4. Elektronische Baugruppe nach einem der Ansprüche 1 bis 3, dadurch gekennzeichnet, daß die beiden Enden (42, 43) der Spule mit der einen bzw. mit der anderen Seite des Körpers (40) dieser Spule verlötet sind.

## Claims

1. Electronic assembly formed by an electronic unit (24) including an electronic module (26) and two electric contact pads (28, 30) and by a coil (22) both of whose ends (42, 43) are electrically connected to the two respective electric contact pads, characterized in that said two electric contact pads are defined by two electrically conductive tongues (28, 30), extending from the electronic module (26), said body (40) of said coil being partially superposed onto each of said two electric contact pads, said coil and said electronic unit being fixed to each other by a solidified binder material provided on said two tongues and arranged so that said body of said coil adheres to the two pads in a durable manner.

2. Electronic assembly according to claim 1, characterized in that said two tongues (28, 30) extend from said electronic module (26) at the median plane (32) of said electronic module.

3. Electronic module according to claim 1 or 2, characterized in that the portion of said two electric contact pads (28, 30) which is superposed onto said body (40) of said coil (22) extends in a lower plane (47) of said electronic module (26), the portion of said coil body which is superposed onto said two electric contact pads being located facing the lateral surface (48) of said electronic module (46).

4. Electronic assembly according to any of claims 1 to 3, characterized in that the two ends (42, 43) of said coil (22) are bonded respectively on either side of said body (40) of said coil.
